# EUROPÄISCHE PATENTSCHRIFT

(11) **EP 1 079 498 B1**
(45) Veröffentlichungstag und Bekanntmachung des Hinweises auf die Patenterteilung: **11.07.2007**
(21) Anmeldenummer: 00117054.7
(22) Anmeldetag: 09.08.2000
(51) Int. Cl.: H02K 1/18, H02K 1/30, H02K 15/02

(54) **Elektrische Maschine mit einem Rotor und einem Stator**
Electric machine with a rotor and a stator
Machine électrique avec un rotor et un stator

(30) Priorität: 20.08.1999 DE 19939528
(43) Veröffentlichungstag der Anmeldung: 28.02.2001
(73) Patentinhaber: Bayerische Motoren Werke Aktiengesellschaft, 80809 München (DE)
(72) Erfinder: Luchner, Clemens, 85598 Baldham (DE); Krasser, Bernhard, 80807 München (DE)

(56) Entgegenhaltungen:
- WO-A-89/09941
- DE-A1- 3 435 508
- US-A- 2 976 907
- US-A- 3 469 309
- US-A- 3 810 372
- US-A- 5 331 832
- US-A- 5 586 460
- PATENT ABSTRACTS OF JAPAN Bd. 014, Nr. 028 (E-875), 19. Januar 1990 (1990-01-19) & JP 01 264547 A (YASKAWA ELECTRIC MFG CO LTD), 20. Oktober 1989 (1989-10-20)

## Beschreibung

Die Erfindung bezieht sich nach dem Oberbegriff des Patentanspruches 1 auf eine elektrische Maschine mit einem Rotor und einem Stator, wobei Rotor und Stator jeweils über gesonderte Tragelemente (Rotornabe, Statorgehäuse) positionierte Blechpakete umfassen und eine drehfeste Verbindung zwischen jeweiligem Tragelement und zugeordnetem Blechpaket mittels einer durch plastische Verformung bewirkten formschlüssigen Anlage des Tragelementes am zugehörigen Blechpaket erzielt ist wobei das jeweilige Blechpaket eine profilierte Anlagefläche für das zugeordnete Tragelement aufweist und wobei mittels einer zumindest bereichsweise wirksamen elektromagnetischen Umformung des Tragelementes dessen formschlüssige Anlage an der profilierten Anlage-fläche des Blechpaketes erzielt ist.

Aus der gattungsbildenden DE-PS 292 175 ist es zur Befestigung von Eisenblechen auf einer Ankerbüchse einer elektrischen Maschine bekannt, daß die Eisenbüchse von innen heraus so weit aufgetrieben oder aufgewalzt wird, daß sie zwischen die einzelnen Bleche etwas eindringt und sie voneinander getrennt festhält. Hierdurch kommt die Wandung der Ankerbüchse mit der jeweiligen inneren Bohrung der einzelnen Bleche in innige Berührung, so daß ein nachträgliches Verschieben ausgeschlossen ist. Das Material der Büchse dringt dabei zwischen die einzelnen Bleche ein und hält sie voneinander getrennt.

Nachteilig bei dieser bekannten, durch plastische Verformung erzielten drehfesten Verbindung ist die betriebssichere Aufnahme und Übertragung hoher Drehmomente.

Aus der JP 01 264547 A ist es bekannt, eine profilierte Anlagefläche mit halbbogenförmigen Ausnehmungen auszugestalten, wobei die Anlageflächensegmente radial innenseitig jedoch flach ausgebildet sind. Auch der DE 34 35 508 A1 zufolge sind halbbogenförmige Ausnehmungen vorgesehen. Diese treffen mit ihren Enden radial innenseitig spitz aufeinander.

Hinsichtlich der Übertragung hoher Drehmomente sind diese Verbindungsgeometrien ebenfalls verbesserungsfähig, auch diese Dokumente geben kein besonderes, auf die Verbindungsgeometrie abgestimmtes Verformungsverfahren an.

Der Erfindung liegt die Aufgabe zugrunde, für die drehfeste Verbindung zwischen dem jeweiligen Blechpaket und dem zugehörigen Tragelement einer elektrischen Maschine zur sicheren Übertragung hoher Drehmomente eine einfache Ausgestaltung in Kombination mit einem wirksamen Verformungsverfahren aufzuzeigen.

Diese Aufgabe ist mit dem Patentanspruch 1 dadurch gelöst, daß einen Rotor mit einem Längsnuten aufweisenden Blechpaket, dessen Anlagefläche für die Rotornabe ein Wellenprofil aufweist, wobei jeder Längsnut ein flächenvergrößernder Wellenberg zugeordnet ist.

Mit der Erfindung ist in besonders vorteilhafter Weise eine hochbelastbare drehfeste Verbindung geschaffen, wobei neben einer mechanisch hochbelastbaren Verbindung des weiteren ein ungestörter Verlauf der Magnetfeldlinien um die Längsnuten erzielt ist.

Für eine elektrische Maschine mit einem Rotor von geringem Schwungmoment (GD²) ist erfindungsgemäß das Tragelement mit einem relativ dünnwandigen Zylindermantel ausgebildet, der mittels elektromagnetischer Umformung in das Wellenprofil des Blechpaketes eingeformt ist.

Für eine elektrische Maschine mit einem Rotor von größerem Schwungmoment und/oder höherer Drehmoment-Übertragung wird vorgeschlagen, daß das Tragelement in Gußausführung eine mit dem Wellenprofil des Blechpaketes korrespondierende Verbindungsfläche aufweist, und daß die mit dem Erkalten der Gußnabe gegebene Schrumpfung ein zum Fügen der Gußnabe mit dem Blechpaket dienendes Fügespiel ergibt, das nach dem Fügen mittels elektromagnetischer Umformung eliminiert ist.

Mit dieser Ausgestaltung ist eine vereinfachte, kostengünstige Herstellung erzielt, wobei die Guß-Rotornabe je nach Bedarf aus Gründen der Akustik und/oder der Lüftung innenseitig zylindrisch oder profiliert gestaltet sein kann.

Ein weiterer Aspekt der Erfindung bezieht sich darauf, daß in der profilierten Anlagefläche des jeweiligen Blechpaketes eine zusätzliche Vertiefung vorgesehen ist, wobei ein in die Vertiefung mittels elektromagnetischer Umformung eingeformter Abschnitt der Rotornabe deren Axialsicherung relativ zum Blechpaket dient.

Damit ist neben der durch das Wellenprofil gesicherten Drehmomentübertragung in Umfangsrichtung auch eine Axialsicherung des Rotors relativ zu seinem Blechpaket erzielt

Vorzugsweise weist die profilierte Anlagefläche des Blechpakets eine, zusätzliche Vertiefung auf wobei, ein in die Vertiefung bei der elektromagnetischen Umformung eingeformter Abschnitt der Rotornabe eine Axialsicherung bewirkt.

Die erfindungsgemäß gestaltete elektrische Maschine findet bevorzugt Verwendung als ein mit einer Kurbelwelle einer Brennkraftmaschine kuppelbarer Asynchron-Motor als Starter- und Generator-Einrichtung.

Hierbei kann bei einem den Rotor üblicherweise umschließenden Stator dessen Blechpaket in der erfindungsgemäßen Art beispielsweise mit einer die Brennkraftmaschine und das anschließende Getriebe verbindenden Gehäuseglocke in drehfester Verbindung stehen, wobei die Gehäuseglocke mittels elektromagnetischer Umformung mit dem Blechpaket des Stators durch plastische Verformung verbunden ist.

Die Erfindung ist anhand in der Zeichnung schematisch dargestellter Rotor-Abschnitte beschrieben. Es zeigt
- Figur 1: eine Rotornabe mit einem dünnwandigen Zylindermantel,
- Figur 2: eine Rotornabe in Gußausführung.

Eine lediglich abschnittsweise dargestellte elektrische Maschine 1 umfaßt einen üblichen Rotor 2 und einen diesen umgebenden, nicht gezeigten Stator, wobei der Rotor 2 über ein gesondertes, als Rotornabe 3 gestaltetes Tragelement positioniertes Blechpaket 4 umfaßt. Eine drehfeste Verbindung zwischen dem als Rotornabe 3 gestalteten Tragelement und dem zugeordneten Blechpaket ist mittels einer durch plastische Verformung bewirkten formschlüssigen Anlage der Rotornabe am zugehörigen Blechpaket erzielt.

Zur Erzielung einer hochbelastbaren drehfesten Verbindung zwischen dem Blechpaket 4 und der Rotornabe 3 ist eine einfache Ausgestaltung der Verbindung in Kombination mit einem wirksamen Verformungsverfahren aufzuzeigen.

Erfindungsgemäß weist hierfür das Blechpaket 4 eine profilierte Anlagefläche 5 für die zugeordnete Radnabe 3 auf, wobei mittels einer zumindest bereichsweise wirksamen elektromagnetischen Umformung der Rotornabe 3 deren formschlüssige Anlage an der profilierten Anlagefläche 5 des Blechpaketes 4 erzielt ist.

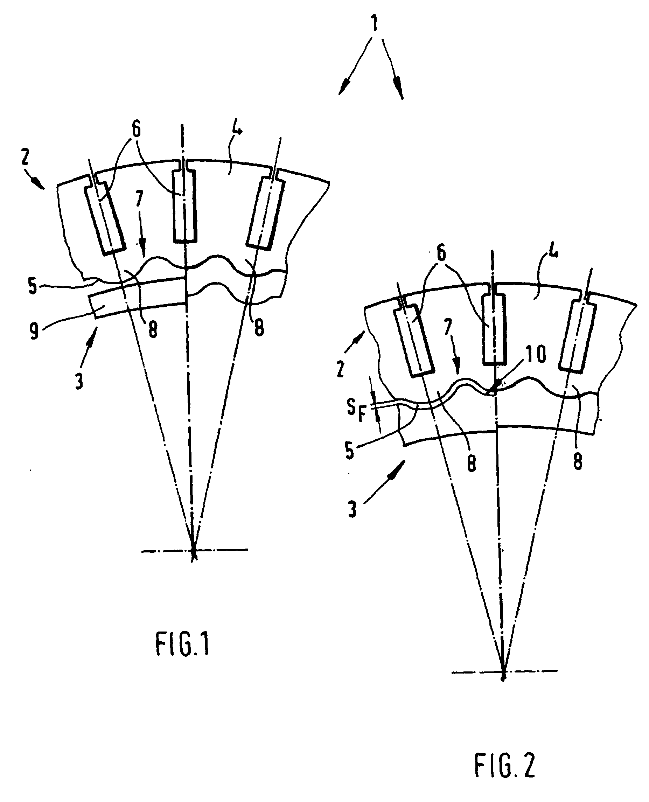

Für jeden Rotor 2 der Figuren 1 und 2 mit jeweils einem Längsnuten 6 aufweisenden Blechpaket 4 ist die jeweilige Anlagefläche 5 für die jeweilige Rotornabe 3 als ein Wellenprofil 7 gestaltet, wobei jeder Längsnut 6 ein flächenvergrößernder bzw. querschnittsvergrößernder Wellenberg 8 zugeordnet ist.

Gemäß Figur 1 ist die Rotornabe 3 mit einem relativ dünnwandigen Zylindermantel 9 ausgebildet, der mittels elektromagnetischer Umformung in das Wellenprofil 5 des Blechpaketes 4 gemäß der rechten Bildhälfte der Figur 1 eingeformt ist.

Gemäß Figur 2 weist eine in Guß ausgeführte Rotornabe 3 eine mit dem Wellenprofil 7 des Blechpaketes 4 korrespondierende Verbindungsfläche 10 auf, wobei die mit dem Erkalten der Gußnabe 3 gegebene Schrumpfung ein zum Fügen der Gußnabe 3 mit dem Blechpaket 4 dienendes Fügespiel ergibt, das nach dem Fügen mittels elektromagnetischer Umformung eliminiert ist.

Zur Axialsicherung der Rotornabe 3 relativ zum Blechpaket 4 ist in der profilierten Anlagefläche 5 des Blechpaketes 4 eine zusätzliche, nicht gezeigte Vertiefung vorgesehen, wobei ein in die Vertiefung bei der elektromagnetischen Umformung eingeformter Abschnitt der Rotornabe 3 eine Axialsicherung bewirkt.

Die erfindungsgemäß gestaltete elektrische Maschine 1 findet bevorzugt Verwendung als ein mit einer Kurbelwelle einer nicht dargestellten Brennkraftmaschine kuppelbarer Asynchron-Motor, der als Starter und Generator dient. Weiter kann auch ein Synchron-Motor verwendet werden.

Die für einen üblichen Rotor 2 gemäß den Figuren 1 und 2 beschriebene erfindungsgemäße Ausführung gilt sinngemäß auch für einen Stator, wobei der Stator den Rotor 2 umschließen kann oder aber der Rotor 2 den Stator umschließt.

## Patentansprüche

1. Elektrische Maschine mit einem Rotor (2) und einem Stator,
- wobei Rotor (2) und/oder Stator jeweils über gesonderte Tragelemente (3) positionierte Blechpakete (4) umfassen, und
- eine drehfeste Verbindung zwischen jeweiligem Tragelement (3) und zugeordnetem Blechpaket (4) mittels einer durch plastische Verformung bewirkten formschlüssigen Anlage des Tragelementes (3) am zugehörigen Blechpaket (4) erzielt ist,
- wobei das jeweilige. Blechpaket (4) eine profilierte Anlagefläche (5) für das zugeordnete Tragelement (3) aufweist, und
- wobei mittels einer zumindest bereichsweise wirksamen elektromagnetischen Umformung des Tragelementes (3) dessen formschlüssige Anlage an der profilierten Anlagefläche (5) des Blechpaketes (4) erzielt ist,
**gekennzeichnet durch**
- einen Rotor (2) mit einem Längsnuten (6) aufweisenden Blechpaket (4), dessen
- Anlagefläche (5) für das Tragelement (3), das eine Rotornabe ist, ein Wellenprofil (7) aufweist, wobei
- jeder Längsnut (6) ein flächenvergrößernder Wellenberg (8) zugeordnet ist.

2. Elektrische Maschine nach Anspruch 1, **dadurch gekennzeichnet,**
- **daß** das Tragelement (3) mit einem relativ dünnwandigen Zylindermantel (9) ausgebildet ist, der
- mittels elektromagnetischer Umformung in das Wellenprofil (7) des Blechpaketes (4) eingeformt ist.

3. Elektrische Maschine nach Anspruch 1, **dadurch gekennzeichnet,**
- **daß** das Tragelement (3) in Gußausführung eine mit dem Wellenprofil (7) des Blechpaketes (4) korrespondierende Verbindungsfläche (10) aufweist, und
- **daß** die mit dem Erkalten der Gußnabe (3) gegebene Schrumpfung ein zum Fügen der Gußnabe (3) mit dem Blechpaket (4) dienendes Fügespiel (S_{F}) ergibt, das
- nach dem Fügen mittels elektromagnetischer Umformung eliminiert ist.

4. Elektrische Maschine nach einem der Ansprüche 1 bis 3, **dadurch gekennzeichnet,**
- **daß** in der profilierten Anlagefläche (5) des jeweiligen Blechpaketes (4) eine zusätzliche Vertiefung vorgesehen ist, wobei
- ein in die Vertiefung bei der elektromagnetischen Umformung eingeformter Abschnitt des Tragelements (3) zu deren Axialsicherung relativ zum Blechpaket (4) dient.

5. Elektrische Maschine nach einem der Ansprüche 1 bis 4, **gekennzeichnet durch**
- eine zusätzliche Vertiefung in der profilierten Anlagefläche (5) des Blechpakets (4), wobei
- ein in die Vertiefung bei der elektromagnetischen Umformung eingeformter Abschnitt der Rotornabe (3) eine Axialsicherung bewirkt.

6. Verwendung eine elektrischen Maschine nach einem oder mehreren der Ansprüche 1 bis 5 als ein mit einer Kurbelwelle einer Brennkraftmaschine kuppelbarer Asynchron-Motor oder Synchron-Motor als Starter- und Generator-Einrichtung.

## Claims

1. An electric machine comprising a rotor (2) and a stator,
- wherein the rotor (2) and/or stator each have a laminated core (4) positioned via separate bearing elements (3) and
- a torsion-resistant connection between each bearing element (3) and the associated laminated core (4) is made by positive abutment, produced by plastic deformation, of the bearing element (3) against the associated laminated core (4),
- wherein each laminated core (4) has a profiled abutment surface (5) for the associated bearing element (3) and
- wherein the positive abutment of the bearing element against the profiled abutment surface (5) of the laminated core (4) is obtained by electromagnetic reforming of the bearing element (3), operative at least at some places,
**characterised by**
- a rotor (2) having a laminated core (4) formed with a slot (6),
- the bearing surface (5) of the core having a wavy profile (7) for the bearing element (3), which is a rotor hub, wherein
- each slot (6) is associated with a wave crest (8) which increases the surface area.

2. An electric machine according to claim 1,
**characterised in that**
- the bearing element (3) has a relatively thin-walled cylindrical jacket (9),
- which is moulded to the shape of the wavy profile (7) of the laminated core (4) by electromagnetic reforming.

3. An electric machine according to claim 1,
**characterised in that**
- the bearing element (3) is cast and has a connecting surface (10) corresponding to the wavy profile (7) of the laminated core (4),
- the shrinkage of the cast hub (3) on cooling results in a cap (S_{F}) of use for joining the cast hub (3) to the laminated core (4),
- the gap being eliminated by electromagnetic reforming after joining.

4. An electric machine according to any of claims 1 to 3,
**characterised in that**
- an additional recess is formed in the profiled abutment surface (5) of each respective laminated core (4), wherein
- the bearing element (3) is axially secured relative to the laminated core (4) by a portion of the bearing element which is moulded to the shape of the recess during the electromagnetic reforming process.

5. An electric machine according to any of claims 1 to 4,
**characterised by**
- an additional recess in the profiled abutment surface (5) of the laminated core (4), wherein
- axial securing is provided by a portion of the rotor hub (3) which is moulded to the shape of the recess during the electromagnetic reforming process.

6. Use of an electric machine according to one or more of claims 1 to 5 as a starter and generator device in the form of an asynchronous or synchronous motor for coupling to a crankshaft of an internal combustion engine.

## Revendications

1. Machine électrique comportant un rotor (2) et un stator, dans laquelle
- le rotor (2) et/ou le stator comprennent respectivement des empilages de tôles (4) positionnés par l'intermédiaire d'éléments porteurs (3) séparés,
- une liaison solidaire en rotation entre l'élément porteur (3) respectif et l'empilage de tôles (4) associé est obtenue au moyen d'une butée, par complémentarité de formes, provoquée par déformation plastique, de l'élément porteur (3) contre l'empilage de tôles (4) correspondant,
- l'empilage de tôles (4) respectif présente une surface de butée profilée (5) pour l'élément porteur (3) associé, et
- un façonnage électromagnétique agissant au moins sur certaines zones, de l'élément porteur (3) permet d'obtenir la butée par complémentarité de formes de celui-ci contre la surface de butée (5) profilée de l'empilage de tôles (4),
**caractérisée par**
- un rotor (2) comportant un empilage de tôles (4) présentant des rainures longitudinales (6), dont
- la surface de butée (5) pour l'élément porteur (3) qui est un moyeu de rotor, présente un profil ondulé (7), et
- un sommet (8) agrandissant la surface étant affecté à chaque rainure longitudinale (6).

2. Machine électrique selon la revendication 1,
**caractérisé en ce que**
- l'élément porteur (3) est conçu avec un corps de cylindre (9) à paroi relativement mince, qui
- est soudé dans le profil ondulé (7) de l'empilage de tôles (4) par façonnage électromagnétique.

3. Machine électrique selon la revendication 1,
**caractérisée en ce que**
- l'élément porteur (3) en fonte présente une surface de liaison (10) correspondant au profil ondulé (7) de l'empilage de tôles (4), et
- le retrait consécutif au refroidissement du moyeu en fonte (3) donne un jeu d'assemblage (S_{F}) servant à l'assemblage du moyeu en fonte (3) avec l'empilage de tôles (4),
- jeu qui est éliminé après l'assemblage par façonnage électromagnétique.

4. Machine électrique selon l'une quelconque des revendications 1 à 3,
**caractérisée en ce qu'**
- un renfoncement supplémentaire est prévu dans la surface de butée profilée (5) de l'empilage de tôles (4) concerné, et
- un tronçon, moulé dans le renfoncement par façonnage électromagnétique, de l'élément porteur (3) sert à la sécurisation axiale de celui-ci par rapport à l'empilage de tôles (4).

5. Machine électrique selon l'une quelconque des revendications 1 à 4,
**caractérisée par**
- un renfoncement supplémentaire dans la surface de butée profilée (5) de l'empilage de tôles (4), et
- un tronçon, moulé dans le renfoncement lors du façonnage électromagnétique, du moyeu de rotor (3) garantit une sécurisation axiale.

6. Utilisation d'une machine électrique selon une quelconque ou plusieurs des revendications 1 à 5, comme moteur asynchrone ou moteur synchrone pouvant être couplé à un vilebrequin d'un moteur à combustion interne en tant que dispositif de démarrage et générateur.
